# DEMANDE DE BREVET EUROPEEN

(11) **EP 0 747 163 A1**
(43) Date de publication de la demande: **11.12.1996**
(21) Numéro de dépôt: 96401207.4
(22) Date de dépôt: 06.06.1996
(51) Int. Cl.: B23K 35/22, B23K 20/18

(54) **Revêtement inorganique résistant à haute température et son utilisation dans un procédé de fabrication de pièces par soudage diffusion et formage superplastique**

(30) Priorité: 08.06.1995 FR 9506479
(71) Demandeur: SOCIETE NATIONALE D'ETUDE ET DE CONSTRUCTION DE MOTEURS D'AVIATION Snecma, F-75015 Paris (FR)
(72) Inventeur: Calle, Gilles Michel Georges Louis, 77500 Chelles (FR); Valente-Champion, Isabelle Marie Monique, 95600 Eaubonne (FR); Klein, Gilles Charles, 95540 Mery/Oise (FR); Marty, Christian, 92100 Boulogne (FR)

(57) **Abrégé**

Un revêtement résistant à haute température, durable et constituant une barrière d'anti-diffusion dans la mise en oeuvre d'un procédé de fabrication de pièces en alliages métalliques par soudage-diffusion et formage superplastique est obtenu par le dépôt d'une charge céramique réfractaire diluée dans I'eau telle que oxyde de titane, oxyde de cérium ou oxyde d'yttrium et d'un liant inorganique sous forme d'une solution colloîdale aqueuse d'oxyde de titane, d'oxyde de cérium ou d'oxyde d'yttrium notamment.

## Description

L'invention concerne un revêtement résistant à haute température et durable, appliqué sur des substrats métalliques et destiné à constituer une barrière anti-diffusion dans la mise en oeuvre d'un procédé de fabrication de pièces en alliages de titane par soudage-diffusion et formage superplastique.

La réalisation de revêtement faisant office de barrière de diffusion implique généralement la formulation de solutions contenant des matériaux très différents. Classiquement la charge est constituée de poudres céramiques mises en suspension dans un solvant organique. La cohésion du dépôt étant assuré à basse température par un liant organique par exemple du polymethacrylate de méthyle (PMMA).

Pour certains procédés, par exemple le soudage diffusion associé au formage superplastique, la présence de ces liants organiques s'avère néfaste à la qualité des joints soudés. De plus, la mise en oeuvre de ces revêtements nécessite des gammes de mise en oeuvre compliquées et des installations lourdes et coûteuses.

Un des buts de l'invention est de proposer de nouvelles formulations de revêtement permettant d'obtenir des revêtements possédant de bonnes caractéristiques mécaniques à haute température et permettant la suppression des liants organiques, en évitant toute réactivité vis à vis des alliages de titane.
Un revêtement destiné à l'utilisation précitée et répondant aux conditions recherchées est caractérisé en ce qu'il comprend un mélange de :
- charge d'oxydes métalliques réfractaires, non réactive vis à vis des alliages de titane,
- un liant sous forme de solution colloïdale inorganique, non réactive vis à vis des alliages de titane,
- de l'eau en quantité suffisante pour permettre l'application sur pièce de ladite charge et dudit liant.

De manière avantageuse, charge et liant sont choisis dans le groupe constitué par l'oxyde de titane, l'oxyde de cérium et l'oxyde d'yttrium ou un mélange de ces constituants, le liant se présentant sous forme d'une solution colloïdale aqueuse.

D'autres caractéristiques et avantages de l'invention seront mieux compris à la lecture de la description qui va suivre des exemples de composition du revêtement conforme à l'invention et un exemple de mise en oeuvre dans un procédé de fabrication de pièces par soudage-diffusion et formage superplastique, en référence aux dessins annexés sur lesquels :
- la figure 1 représente selon une vue schématique en perspective un exemple de pièces à assembler par la mise en oeuvre du revêtement conforme à l'invention ;
- la figure 2 représente selon une vue de face une pièce de l'assemblage de la figure 1 au stade de la mise en place du revêtement ;
- la figure 3 représente selon une vue schématique en perspective les pièces de la figure 1 au stade de l'assemblage ;
- la figure 4 représente selon une vue schématique en coupe l'assemblage de la figure 3 mis en place dans un moule ;
- la figure 5 représente selon une vue schématique en coupe analogue à celle de la figure 4 l'assemblage de la figure 4 au stade du gonflage ;
- la figure 6 représente selon une vue schématique en coupe analogue à celles des figures 4 et 5 l'assemblage obtenu dans le moule dans son état final.

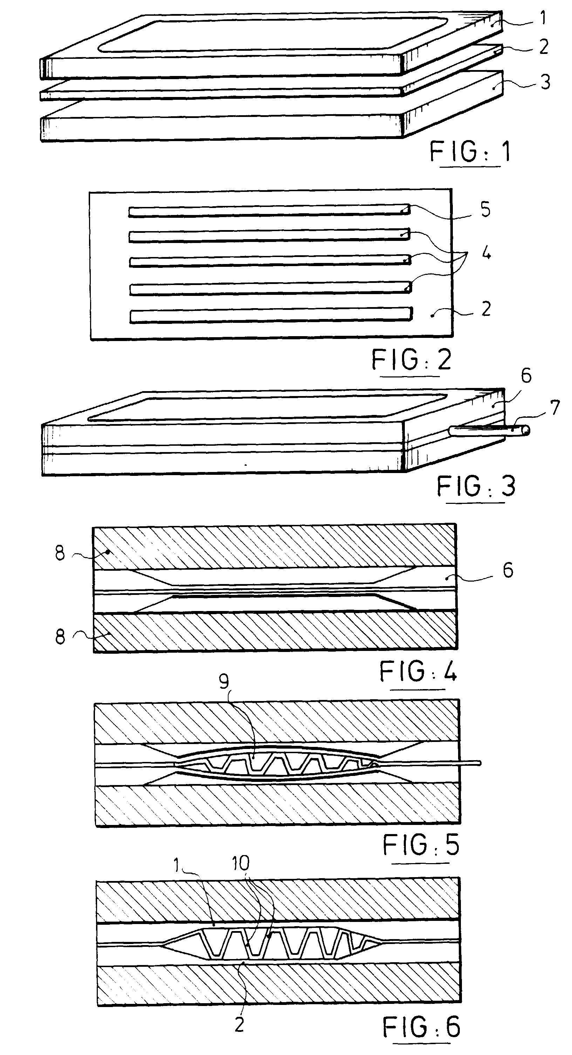

Le revêtement conforme à l'invention appliqué sur un substrat constitué de pièces en alliages de titane destinées à être assemblées par liaison métallurgique est mis en oeuvre dans le cadre d'un procédé connu en soi associant la technique du soudage-diffusion et celle du formage superplastique. Ces techniques sont notamment utilisées pour obtenir des structures aéronautiques telles que des pièces de moteurs d'avion, notamment des aubes creuses telles que des aubes de soufflante, en alliage de titane. Les figures 1 à 6 illustrent les étapes dudit procédé de fabrication.

Au moins deux pièces primaires, par exemple trois pièces 1, 2 et 3 dans l'exemple représenté sur la figure 1 sont obtenues par des moyens classiques, à partir de tôles ou par forgeage et sont destinées à être assemblées pour former une structure. Sur au moins une de ces pièces, telle que la pièce 2 représentée sur la figure 2, après masquage à l'aide d'un revêtement organique connu en soi et découpe d'un motif 4 prédéfini, suivi du pelage des zones ainsi déterminées, on applique selon le motif 4 un dépôt formant un revêtement 5 constitué d'un produit possédant des propriétés particulières d'anti-diffusion vis à vis des métaux présents dans les alliages de titane des pièces. Comme schématisé sur la figure 3, les pièces 1, 2 et 3 sont ensuite assemblées pour former un sandwich 5 en prévoyant une étanchéité périphérique de l'assemblage et en adjoignant un tube 7 destiné à relier la cavité interne à des moyens soit de pompage soit de mise sous pression. L'ensemble-sandwich 6 obtenu est ensuite mis en place dans un moule ou matrice 8, comme schématisé sur la figure 4. Une liaison métallurgique entre les parties non revêtues du produit d'anti-diffusion est ensuite obtenue par soudage-diffusion grâce à une mise sous pression isostatique. La formation d'au moins une cavité 9 interne à la structure désirée est ensuite obtenue par gonflage sous pression de gaz tel que de l'argon conduisant à obtenir un formage superplastique des différentes pièces 1, 2 et 3 constituant la structure 6. Les figures 5 et 6 montrent l'introduction du gaz sous pression et l'état final de la structure obtenue comportant notamment dans l'exemple représenté deux peaux 1 et 3 reliées par des raidisseurs 10 formés à partir de la pièce interne 2, lesdits raidisseurs 10 étant liés par soudure sur lesdites peaux 1 et 3.

De manière remarquable et conforme à l'invention, un revêtement 5 de composition avantageuse est utilisé. Ainsi ledit revêtement 5 est obtenu par l'application d'un produit constitué par la mise en solution d'une charge d'oxydes métalliques réfractaires destinée à former une barrière d'anti-diffusion dans une solution colloïdale aqueuse contenant une dispersion stable de particules inorganiques non réactives à haute température avec les métaux des alliages constituant les pièces à assembler. Le mélange utilisé est constitué des produits choisis dans le groupe comprenant l'oxyde d'yttrium Y₂O₃, l'oxyde de titane TiO₂ et l'oxyde de cérium CeO₂ ou un mélange de ceux-ci.

Un mode avantageux d'application du revêtement est le suivant :
- mélange de la charge d'oxydes métalliques réfractaires à de l'eau ;
- dépôt de la solution obtenue sur la surface à revêtir selon le motif 4 désiré ;
- démasquage total du masque ;
- dépôt de la solution colloïdale de liant sur la pièce 2 afin de maintenir le revêtement en position lors de l'assemblage des pièces en sandwich 6.

Le dépôt de la solution aqueuse contenant la charge peut être réalisé par des techniques classiques connues en soi telles que par projection au pistolet ou par sérigraphie. Pour le réaliser, la pièce 2 après décapage peut par exemple être recouverte d'un produit masquant, tel qu'un polymère organique, sur lequel on découpe le motif 4 désiré.Le masque est ensuite pelé de manière à découvrir les zones destinées à être recouvertes du revêtement 5 d'antidiffusion. Le masque restant est ensuite pelé et l'assemblage peut être réalisé. Dans le cas où le dépôt de la charge diluée dans l'eau est effectué par sérigraphie, l'opération peut de façon avantageuse être enchaînée avec le dépôt au pistolet du liant colloïdal.
Contrairement aux procédés connus antérieurs utilisant un liant organique par exemple de type acrylique dans le produit appliqué pour obtenir le revêtement d'anti-diffusion sur les pièces à assembler, un traitement préalable assurant l'élimination des produits organiques par dégradation du liant organique n'est plus imposé. Le revêtement conforme à l'invention évite ainsi de nombreux inconvénients résultant des solutions connues antérieures. En effet, la présence de résidus organiques dans la cavité interne du sandwich entraîne des effets néfastes lors de l'opération de soudage-diffusion. Notamment, une pression gazeuse interne peut en résulter empêchant le contact intime des pièces. En outre, une pollution des surfaces nuisant à la qualité des soudures peut résulter d'une interaction chimique entre ces résidus gazeux ou solides et le matériau des pièces.

Ces inconvénients aggravés dans le cas d'application à des pièces en alliage de titane sont également évités grâce à l'utilisation du revêtement conforme à l'invention. Dans le cas d'un alliage de titane en effet, le traitement de dégradation, atmosphère oxydante, en présence d'air, doit être effectué entre 200°C et 300°C pour obtenir la dégradation du liant sans oxyder le métal de base. Or à ces températures l'élimination des résidus organiques peut rester incomplète, ce qui peut conduire à des joints soudés dont la ténacité est inférieure à la ténacité du métal de base. Par suite, la nécessité d'élever les températures du traitement impose l'utilisation d'un enceinte sous vide ou sous atmosphère inerte, nécessitant des installations lourdes et coûteuses, ainsi que des précautions particulières de mise en oeuvre délicate que l'invention permet d'éviter : purges répétées pour assurer un dégazage total de la cavité interne de la structure à assembler.

Un autre inconvénient est évité grâce à l'absence de tout liant organique. En effet, à la suite de la dégradation du liant organique, la tenue mécanique du revêtement de produit d'anti-diffusion n'est plus assuré. Ceci entraîne un risque important de migration du revêtement dans des zones destinées à être soudées. Il en résulte des défauts de soudure par absence de continuité métallurgique qui occasionnent une diminution de la résistance mécanique des joints de soudure. La présence du liant céramique permet l'obtention d'une bonne cohésion du revêtement jusqu'à la température de soudage atteignant 850°C à 990°C pour un alliage de titane. Lorsque le liant colloïdal TiO₂ est utilisé, aucun nettoyage des surfaces n'est nécessaire car ce liant laisse possible la réalisation du soudage-diffusion.

On observe que l'utilisation du liant inorganique sous forme de solution colloïdale où la taille des particules est de l'ordre de 20 Å permet lors du séchage d'obtenir une polymérisation de l'oxyde métallique qui assure une solidité mécanique du revêtement.

## Revendications

1. Revêtement résistant à haute température, durable constituant une barrière anti-diffusion dans la mise en oeuvre d'un procédé de fabrication de pièces en alliages de titane par soudage-diffusion et formage superplastique, caractérisé en ce qu'il comprend un mélange de
- charge d'oxydes métalliques réfractaires, non réactive vis à vis des alliages de titane,
- un liant sous forme de solution colloïdale inorganique, non réactive vis à vis des alliages de titane,
- de l'eau en quantité suffisante pour permettre l'application sur pièce de ladite charge et dudit liant.

2. Revêtement selon la revendication 1 caractérisé en ce que ledit liant inorganique se présente sous la forme d'une solution colloïdale aqueuse d'oxyde de titane et la charge est composée d'oxyde d'yttrium.

3. Revêtement selon la revendication 1 caractérisé en ce que ledit liant inorganique se présente sous la forme d'une solution colloïdale aqueuse d'oxyde d'yttrium et la charge est composée d'oxyde d'yttrium.

4. Revêtement selon la revendication 1 caractérisé en ce que ledit liant inorganique se présente sous la forme d'une solution colloïdale aqueuse d'oxyde de titane et la charge est composée d'oxyde de cérium.

5. Revêtement selon la revendication 1 caractérisé en ce que ledit liant inorganique se présente sous la forme d'une solution colloïdale aqueuse d'oxyde de cérium et la charge est composée d'oxyde d'yttrium.

6. Revêtement selon la revendication 1 caractérisé en ce que sa composition est un mélange des liants inorganiques sous forme de solutions colloïdales et des charges comprenant l'oxyde de titane, l'oxyde de cérium et l'oxyde d'yttrium.

7. Procédé de réalisation du revêtement conforme à l'une quelconque des revendications 1 à 6 appliqué sur un élément de structure en alliage de titane comportant les étapes suivantes :
a) masquage avec un produit organique,
b) découpe d'un motif prédéfini,
c) pelage partiel du masque des zones prédéfinies,
d) pulvérisation de la charge céramique réfractaire diluée dans l'eau,
e) démasquage total du masque,
f) pulvérisation du liant inorganique
g) nettoyage des surfaces.

8. Procédé de réalisation du revêtement selon la revendication 7 dans lequel le dépôt de la charge céramique réfractaire diluée dans l'eau est effectué par sérigraphie et le liant inorganique est déposé au pistolet.

9. Procédé de réalisation du revêtement selon l'une des revendications 7 ou 8 dans lequel à l'étape f, le liant utilisé est sous forme d'une solution colloïdale d'oxyde de titane et l'étape g est supprimée.

10. Procédé de fabrication de pièces comportant une étape de réalisation de revêtement conforme à l'une quelconque des revendications 7 à 9 et comportant le découlé opératoire suivant :
- usinage des pièces constitutives du sandwich,
- réalisation du revêtement sans traitement subséquent de pré-dégradation,
- assemblage du sandwich,
- mise au vide et scellement périphérique,
- soudage diffusion de la structure et formage superplastique de la structure par pression interne.
